(19) Europäisches Patentamt
European Patent Office
Office européen des brevets

(11) **EP 3 397 431 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **16829246.4**

(22) Anmeldetag: **27.12.2016**

(51) Internationale Patentklassifikation (IPC):
**B25J 9/16** (2006.01)  **G05B 19/406** (2006.01)

(52) Gemeinsame Patentklassifikation (CPC):
**G05B 19/406; B25J 9/1664; B25J 9/1674;**
G05B 2219/37624; G05B 2219/37626;
G05B 2219/39082; G05B 2219/39315;
G05B 2219/40201; G05B 2219/40317;
G05B 2219/40497; G05B 2219/49162

(86) Internationale Anmeldenummer:
**PCT/EP2016/082690**

(87) Internationale Veröffentlichungsnummer:
**WO 2017/114818 (06.07.2017 Gazette 2017/27)**

(54) **ROBOTER UND VERFAHREN ZUM BETREIBEN EINES ROBOTERS**

ROBOT AND METHOD FOR OPERATING A ROBOT

ROBOT ET PROCÉDÉ PERMETTANT DE FAIRE FONCTIONNER UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2015 DE 102015122998**

(43) Veröffentlichungstag der Anmeldung:
**07.11.2018 Patentblatt 2018/45**

(73) Patentinhaber: **Franka Emika GmbH**
**80797 München (DE)**

(72) Erfinder: **HADDADIN, Sami**
**30173 Hannover (DE)**

(74) Vertreter: **Novagraaf Group**
**Chemin de l'Echo 3**
**1213 Onex / Geneva (CH)**

(56) Entgegenhaltungen:
DE-A1-102004 026 185     GB-A- 2 106 279
US-A1- 2015 057 799

• A. VAKANSKI ET AL: "Trajectory Learning for Robot Programming by Demonstration Using Hidden Markov Model and Dynamic Time Warping", IEEE TRANSACTIONS ON SYSTEMS, MAN AND CYBERNETICS. PART B:CYBERNETICS., Bd. 42, Nr. 4, 14. Oktober 2012 (2012-10-14), Seiten 1039-1052, XP055373948, US ISSN: 1083-4419, DOI: 10.1109/TSMCB.2012.2185694

**Beschreibung**

Die Erfindung betrifft ein Verfahren zum Betreiben eines Roboters, wobei der Roboter mittels Aktoren antreibbare, bewegliche Elemente aufweist und zur Ausführung einer Bewegung B mit den beweglichen Elementen eingerichtet ist.

Bekanntermaßen werden Roboter zunehmend in Bereichen eingesetzt, in denen der Roboter über seine beweglichen Elemente, beispielsweise einen Roboterarm, bei der Ausführung einer vorgegebenen Aufgabe eine Bewegung B mit seinen beweglichen Elementen ausführt und dabei mit seiner Umgebung mechanisch interagiert. Durch die Interaktion mit der Umgebung werden insbesondere Kräfte und/oder Drehmomente aber auch andere physikalische Größen, wie beispielsweise Wärme, elektrische oder magnetische Felder etc., auf die beweglichen Elemente durch die Umgebung übertragen.

Die Umgebung kann immobile oder mobile Objekte umfassen. Insbesondere kann die Umgebung ein Mensch sein, der mit den beweglichen Elementen des Roboters interagiert. Dabei kann ein Roboter zur Erledigung unterschiedlicher Aufgaben mit seinen beweglichen, aktorisch antreibbaren Elementen eine Vielzahl unterschiedlicher Bewegungen B durchführen, die wiederum jede für sich eine Interaktion mit der Umgebung einschließen. Der Begriff " Interaktion" beschreibt vorliegend die bei einer aufgabengemäßen Durchführung der Bewegung B auftretende (zumeist mechanische) Wechselwirkung mit der Umgebung des Roboters. Die " Interaktion" lässt sich beispielsweise durch einen vorgegebenen Bereich eines Krafteintrages bzw. eines Momenteneintrages, eines Wärmeeintrages, eines Impulseintrages, eines Strahlungseintrages etc., in die beweglichen Elemente bei der Ausführung einer vorgegebenen Bewegung B definieren.

Aus der GB 2 106 279 A geht ein Verfahren zum Betreiben eines Roboters hervor, bei dem für eine vorgegebene sich operativ wiederholende Bewegung des Roboters ein oder mehrere Bewegungsparameter einer zugehörigen Referenzbewegung erfasst und als Zeitreihe gespeichert werden. Bei den sich operativ wiederholenden Bewegungen des Roboters werden aktuelle Bewegungsparameter mit den zugeordneten gespeicherten Werten der Zeitreihe verglichen. Werden bei diesem Vergleich vorgegebene Grenzwerte überschritten, so erfolgt eine Initialisierung einer vorgegebenen Ansteuerung des Roboters.

Aus der US2015/0057799 A1 ist ein Verfahren zur Steuerung eines Roboters bekannt, bei dem zumindest eine operationelle Variable des Roboters überwacht wird und basierend auf der Überwachung eine Fehlerreaktion ausgelöst wird, wobei die Fehlerreaktion aus eine Vielzahl von vorgegebenen Fehlerreaktionen gewählt wird.

Die Aufgabe der Erfindung ist es, ein Verfahren zum Betreiben eines Roboters sowie einen Roboter anzugeben, die in der Lage sind, bei Durchführung einer Bewegung B erwünschte von unerwünschten Interaktionen mit einer Umgebung und dem Menschen zu unterscheiden und die beweglichen Elemente entsprechend anzusteuern.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in der Figur dargestellt sind.

Ein verfahrensgemäßer Aspekt der Aufgabe ist gelöst durch ein Verfahren zum Betreiben eines Roboters, wobei der Roboter mittels Aktoren $AKT_n$ antreibbare, bewegliche Elemente $ELE_m$ aufweist und zur Ausführung einer Bewegung B mit den Elementen $ELE_m$ eingerichtet ist, mit $n = 1, 2,..,N$, $m = 1, 2..,M$, $N = 1, 2, ..,M = 1, 2, ..,.$ und wobei der Roboter eine propriozeptive Sensorik zur Ermittlung von Signalen $W_{G_k^B}(t)$ einer die Bewegung B der Elemente $ELE_m$ und deren Interaktionen mit einer Umgebung charakterisierenden Gruppe von Messgrößen $G_k^B$ mit $k = 1, 2, ..,K$ und $K \geq 1$ umfasst.

Die Anzahl N der Aktoren $AKT_n$ sowie die Anzahl M der beweglichen Elemente $ELE_m$ muss nicht identisch (N = M) sein. Je nach Ausführung des Roboters kann gelten: N > M oder N< M. In vielen Anwendungsfällen, beispielsweise die beweglichen Elemente $ELE_m$ bilden einen Roboterarm, kann gelten: N = M.

Die Aktoren $AKT_n$ sind beispielsweise Elektromotoren, Linearmotoren, Piezoelemente, Pneumatikmotoren, Hydraulikmotoren, hybride Antriebe etc. Die beweglichen Elemente $ELE_m$ sind beispielsweise Armglieder (vorteilhaft inklusive eines gegebenenfalls montierten Endeffektors) eines Roboterarms.

Die Bewegung B der Elemente $ELE_m$ ist vorteilhaft durch Trajektorien, die einen zeitlichen Verlauf einer Lageveränderung (Position und/oder Orientierung) der einzelnen beweglichen Elemente $ELE_m$ (vorteilhaft inklusive eines Endeffektors) angeben, definiert. Die Bewegung B kann alternativ oder zusätzlich durch weitere Parameter definiert sein, beispielsweise durch Geschwindigkeiten und/oder Beschleunigungen der Elemente $ELE_m$, durch mittels der Aktoren $AKT_n$ erzeugte auf die Elemente $ELE_m$ wirkende Kräfte und/oder Drehmomente, und/oder durch einen elektrischen Strom und/oder eine elektrische Spannung zur Ansteuerung der Aktoren $AKT_n$, etc. Eine Interaktion der Elemente $ELE_m$ mit der Umgebung wird vorteilhaft erfasst bzw. definiert durch externe Kräfte und/oder externe Drucke und/oder externe Drehmomente, welche auf die einzelnen Elemente $ELE_m$ wirken. Die Beschreibung einer Interaktion der Elemente $ELE_m$ mit der Umgebung wird vorteilhaft abhängig von der jeweiligen physikalischen Wechselwirkung (= Interaktion) zwischen Umgebung und den Elementen gewählt. Die Wechselwirkung kann beispielsweise eine mechanische Wechselwirkung, eine Strahlungswechselwirkung, eine Wechselwirkung mit Wärmeübergang, mit Stromfluss, mit Spannungserzeugung etc. sein.

Vorteilhaft sind maximale Abweichungen Parameter, welche die Bewegung B sowie die Interaktionen zumindest größtenteils definieren, vorgegeben, die geeignet sind, die Bewegung B der Elemente $ELE_m$ inklusive ihrer Interaktionen mit der Umgebung (bspw. durch extern aufgebrachte Kräfte und/oder Drehmomente und/oder Drucke und/oder Wärmeübergänge und/oder Stromflüsse) mit einer Umgebung zu charakterisieren.

Die propriozeptive Sensorik zur Ermittlung von Signalen $W_{G_k^B}(t)$ einer die Bewegung B der Elemente $ELE_m$ und ihre Interaktion mit der Umgebung charakterisierenden Gruppe von Messgrößen $G_k^B$ mit k = 1, 2, ..,.K und K ≥ 1 umfasst vorteilhaft Sensoren, die eine zeitliche Lageveränderung der einzelnen beweglichen Elemente $ELE_m$ und vorteilhaft weitere Parameter wie Geschwindigkeiten, Beschleunigungen, Kräfte, Drehmomente, Drucke, Temperatur, elektrischen Strom, elektrische Spannung, Positionen und sämtliche Schätzer solcher Parameter enthalten können etc. angeben, die geeignet sind, die Bewegung B der Elemente $ELE_m$ inklusive ihrer Wechselwirkung/Interaktionen (wie vorstehend beschrieben) mit der Umgebung zu charakterisieren.

Die Signale $W_{G_k^B}(t)$ werden vorteilhaft auf Basis von Rohdaten $R_{G_k^B}(t)$ ermittelt, die von Sensoren der propriozeptiven Sensorik erfasst werden und/oder bei dem die Signale $W_{G_k^B}(t)$ auf Basis von Schätzsignalen ermittelt werden. Derartige Schätzsignale können beispielsweise durch den Roboter beschreibende Dynamikmodelle und/oder durch geeignete Beobachter- bzw. Schätzstrukturen ermittelt werden. Vorteilhaft ist insbesondere die Ermittlung der Signale $W_{G_k^B}(t)$ aus einer Kombination von gemessenen Rohdaten $R_{G_k^B}(t)$ und Schätzsignalen. Dadurch kann der Rauschanteil der gemessenen Rohdaten $R_{G_k^B}(t)$ verringert und die Robustheit und Genauigkeit der ermittelten Signale $W_{G_k^B}(t)$ erhöht werden.

Die Gruppe von (physikalischen) Messgrößen $G_k^B$ umfasst eine Anzahl von K Messgrößen, die sich für verschiedene Bewegungen B unterscheiden kann.

D.h. für zwei unterschiedliche Bewegungen $B_1$ und $B_2$ und jeweils zugeordnete gewünschte oder erlaubte Interaktionen mit der Umgebung kann die Anzahl K der Messgrößen wie auch die Auswahl der Messgrößen selbst unterschiedlich ($K_1 \neq K_2$) sein. Es wird hier zur Vereinfachung davon ausgegangen, dass eine aufgabengemäße Bewegung B auch eine eineindeutige Zuordnung von gewünschten bzw. erlaubten Interaktionen mit einer Umgebung besitzt.

Die Messgrößen $G_k^B$ umfassen vorteilhaft beispielsweise Positionen und/oder Geschwindigkeiten einzelner oder aller beweglichen Elemente $ELE_m$, einzelne oder alle auf die einzelnen beweglichen Elemente $ELE_m$ wirkende externe Kräfte und/oder externe Drehmomente und/oder Drucke, einzelne oder alle elektrischen Ströme und/oder elektrischen Spannungen zur Ansteuerung der Aktoren $AKT_n$, die wiederum Antriebsdrehmomenten entsprechen können.

Die Anzahl K und die Auswahl der physikalischen Messgrößen $G_k^B$ werden vorteilhaft für jede Bewegung B einschließlich der zugeordneten Interaktionen mit der Umgebung gesondert und optimiert vorgegeben. Durch die Optimierung einer geeigneten Auswahl der Messgrößen $G_k^B$, kann die Anzahl K der Messgrößen $G_k^B$ vorteilhaft minimiert werden, ohne dass dadurch eine Charakterisierung der Bewegung B einschließlich der zugeordneten Interaktionen mit der Umgebung erfolgt.

Das vorgeschlagene Verfahren umfasst folgende Schritte. In einem Schritt erfolgt mit der propriozeptiven Sensorik ein Ermitteln von Referenzsignalen $W_{G_k^B}^R(t)$ der Messgrößen $G_k^B$ bei wenigstens einer Durchführung der Bewegung B der Elemente $ELE_m$ als Referenz-Bewegung B, wobei die Referenz-Bewegung B auch Referenz-Interaktionen der Elemente $ELE_m$ mit einer Umgebung, insbesondere externe auf die Elemente $ELE_m$ wirkende Kräfte und/oder Drehmomente einschließt.

Unter dem Begriff " Referenz-Interaktionen" werden vorliegend solche Interaktionen/Wechselwirkungen mit der Umgebung verstanden, die bei einer aufgabengemäßen Ausführung der Bewegung B erforderlich, gewünscht und/oder zugelassen sind. In diesem Schritt erfolgt also eine Generierung von Referenzsignalen $W_{G_k^B}^R(t)$ der Messgrößen $G_k^B$. Die propriozeptive Sensorik ist vorteilhaft Teil des Roboters. Die Sensoren sind vorteilhaft mit den Elementen $ELE_m$ und/oder den Aktoren $AKT_n$ verbunden. In einer Weiterbildung werden auch Messgrößen $G_k^B$ berücksichtigt, die von einer externen Sensorik (beispielsweise einem externen Proximitätssensor) ermittelt werden. Die Anzahl und Art externer Sensoren/Sensorik wird vorteilhaft je nach Aufgabenstellung und Zielsetzung ausgewählt.

Soll eine Bewegung B zur Durchführung einer Aufgabe durchgeführt werden, bei der die Elemente $ELE_m$ mit einer Umgebung, beispielsweise einem Menschen, interagieren, so werden beispielsweise die bei der Ausführung der Bewegung B auf die Elemente $ELE_m$ wirkenden und durch den Menschen erzeugten beabsichtigten, gewünschten und erlaubten mechanischen Wechselwirkungen bei der Charakterisierung der Bewegung B berücksichtigt. Wesentlich ist, dass bei der Ermittlung der Referenzsignale $W_{G_k^B}^R(t)$ keine anderen als die beabsichtigten bzw. gewünschten und erlaubten Wechselwirkungen zwischen der Umgebung und den Elementen $ELE_m$ vorliegen.

Vorteilhaft werden die Referenzsignale $W_{G_k^B}^R(t)$ auf Basis eines mehrfachen Durchführens der Bewegung B ermittelt. Durch das vorteilhafte mehrfache Durchführen der Bewegung B ist es möglich, eine Streubreite der beabsichtigten, gewünschten bzw. erlaubten Wechselwirkungen zwischen der Umgebung und den Elementen $ELE_m$ zu erfassen, sowie eventuell wirkende statistische Effekte zu berücksichtigen und bei der Charakterisierung der Bewegung B zu berücksichtigen.

In einem weiteren Schritt erfolgt auf Basis der Referenzsignale $W_{G_k^B}^R(t)$ mit einem adaptiven Verfahren ein automatisches Ermitteln eines analytischen mathematischen Dynamikmodells $M_{G_k^B}$ zur Beschreibung der vom Roboter durchgeführten Referenz-Bewegung B einschließlich der Referenz-Interaktionen (vorteilhaft: eines erlaubten Bereichs von Referenz-Interaktionen) durch die Messgrößen $G_k^B$.

Vorteilhaft erfolgt die Modellbildung, d.h. das adaptive Verfahren zum Ermitteln des mathematischen Modells $M_{G_k^B}$ auf Basis eines oder mehrerer Gaussprozesse. Vorteilhaft ist das Modell $M_{G_k^B}$ ein statistisches Modell, das auf Basis der Signale $W_{G_k^B}^R(t)$ trainiert wird. Weiterhin vorteilhaft umfasst das statistische Modell $M_{G_k^B}$ ein sogenanntes Hidden-Markov-Modell HMM und/oder eine sogenannte Stütz-Vektor-Maschine SMV (engl. für " Support Vector Mashine") und/oder ein neuronales Netz und/oder ein tiefes neuronales Netz. Die Modellbildung auf Basis vorgegebener Referenzdaten ist an sich im Stand der Technik bekannt. Für weitere Details wird auf den einschlägigen Stand der Technik verwiesen.

In einem weiteren Schritt erfolgt während einer betriebsgemäßen Ausführung der Bewegung B mit dem analytischen mathematischen Dynamikmodell $M_{G_k^B}$ ein Prädizieren von Signalen $W_{G_k^B}^P(t)$ zur Beschreibung der Referenz-Bewegung B einschließlich der Referenz-Interaktionen mit der Umgebung durch die Messgrößen $G_k^B$. Der vorstehende und die nachfolgenden Schritte betreffen die Phase einer operationellen, d.h. betriebsgemäßen Ausführung des vorgeschlagenen Verfahrens. Das ermittelte analytischen mathematischen Dynamikmodell $M_{G_k^B}$ erzeugt dabei prädizierte Signale $W_{G_k^B}^P(t)$ der Messgrößen $G_k^B$, in denen insbesondere gewünschte Interaktionen der Elemente $ELE_n$ mit einer Umgebung des Roboters abgebildet sind.

In einem weiteren Schritt erfolgt ein Vergleichen von aktuell bei der betriebsgemäßen Ausführung der Bewegung B ermittelten Signale $W_{G_k^B}(t)$ mit den prädizierten Signalen $W_{G_k^B}^P(t)$ zur Ermittlung einer Abweichung $\Delta_{G_k^B}(t)$ zwischen $W_{G_k^B}^P(t)$ und $W_{G_k^B}(t)$, mit k = 1, 2, ..,K und K $\geq$ 1.

Die Signale $W_{G_k^B}(t)$ werden bei der aktuellen betriebsgemäßen Ausführung der Bewegung B vorteilhaft mittels der propriozeptiven Sensorik und/oder auf Basis von Schätzwerten ermittelt. Das Vergleichen kann beispielsweise ein algebraischer Vergleich und/oder ein statistischer Vergleich der ermittelten Signale $W_{G_k^B}(t)$ mit den prädizierten Signalen $W_{G_k^B}^P(t)$ oder eine Kombination daraus sein.

In einem weiteren Schritt erfolgt, sofern die Abweichung $\Delta_{G_k^B}(t)$ einer vorgegebenen Bedingung $BED_{G_k^B}$ nicht genügt, basierend auf der Abweichung $\Delta_{G_k^B}(t)$ ein Klassifizieren der aktuell aufgetretenen Abweichung $\Delta_{G_k^B}(t)$ in eine von einer Anzahl I vorgegebenen Fehlerklassen $F_{i,G_k^B}(\Delta_{G_k^B}(t))$, mit i = 1, 2, ..,I, und I ≥ 1, wobei für jede der Fehlerklassen $F_{i,G_k^B}(\Delta_{G_k^B}(t))$ vorgegebene Steuerungsinformationen $S_{F_i,G_k^B}(t)$ für die Aktoren AKT$_k$ bereitgestellt sind.

Die Bedingung $BED_{G_k^B}$ kann auch zeitvariant sein:

$$BED_{G_k^B}(t)$$.

Es wird dabei davon ausgegangen, dass für jedwede Abweichung $\Delta_{G_k^B}(t)$ entsprechende Steuerungsinformationen $S_{F_i,G_k^B}(t)$ bereitgestellt sind, so dass immer eine Klassifikation möglich ist. Das heißt vorteilhaft auch, dass für Abweichungen, die eigentlich keine sinnvolle Klassifikation zulassen, zumindest eine entsprechende Fehlerklasse $F_{i,G_k^B}(\Delta_{G_k^B}(t))$, mit entsprechend vorgegebene Steuerungsinformationen $S_{F_i,G_k^B}(t)$ bereitgestellt ist.

Die vorgegebenen Fehlerklassen $F_{i,G_k^B}(\Delta_{G_k^B}(t))$ ermöglichen tatsächlich auftretende Interaktionen mit der Umgebung des Roboters nach Art der Interaktion (beispielsweise hinsichtlich einer Intention oder einer schwere einer Interaktion), und/oder nach Art des Kontaktobjekts in der Umgebung (beispielsweise Mensch, Aufgabenumgebung, sonstige Umgebung), und/oder hinsichtlich eines Aufgabenfortschritts bzw. einer Aufgabenerfüllung zu klassifizieren. Dies ist insbesondere wesentlich für eine Integration von Interaktionen zwischen Menschen und Robotern in die Aufgabensteuerung bei Verwendung von propriozeptiver oder taktiler Informationen auf Basis von beispielsweise statistischen Modellen dieser Interaktionen.

Vorteilhaft geben die Bedingung $BED_{G_k^B}$ für zumindest eine der K Messgrößen $G_k^B$ vor, dass die Abweichung $\Delta_{G_k^B}(t)$ zwischen $W_{G_k^B}^P(t)$ und $W_{G_k^B}(t)$ kleiner/gleich als ein vorgegebener Grenzwert $LIMIT_{G_k^B}$ ist: $\Delta_{G_k^B}(t) \leq LIMIT_{G_k^B}$ ist. Natürlich sind die Bedingungen $BED_{G_k^B}$ je nach Aufgabenstellung und auszuführender Bewegung B jeweils individuell beliebig vorgebbar.

Vorteilhaft definieren die Steuerungsinformationen $S_{F_i,G_k^B}(t)$ für die Aktoren AKT$_n$ eine abgeschlossene Reaktionsbewegung der aktorisch angetriebenen Elemente ELE$_m$ und/oder eine Änderung zumindest einer der Bedingungen $BED_{G_k^B}$ und/oder eine Änderung des Modells $M_{G_k^B}$.

Als Reaktionsbewegungen kommen beispielsweise eine Ausweichbewegung, d.h. eine Änderung der bisherigen Bewegung B, oder ein Stoppen der bisher ausgeführten Bewegung B, oder ein Stoppen einer Bewegung einzelner Elemente ELE$_m$ oder ein Umschalten auf einen anderen Regelmodus in Betracht.

Die Steuerungsinformationen $S_{F_i,G_k^B}(t)$ können sich auf die aktuelle Ausführung der Bewegung B beziehen, beispielsweise kann die Bewegungsgeschwindigkeit der aktuellen Bewegung B reduziert werden. In letzterem Fall werden die Aktoren AKT$_n$ bspw. von einem vorgegebenen Steuerprogramm zur Ausführung einer Nominalaufgabe unter Berücksichtigung der Steuerungsinformationen $S_{F_i,G_k^B}(t)$ gesteuert. Die Steuerungsinformationen $S_{F_i,G_k^B}(t)$ können aber auch die alleinige Quelle von Steuerungsinformationen der Aktoren AKT$_n$ darstellen. Die Steuerungsinformationen $S_{F_i,G_k^B}(t)$ können auch eine Änderung aller weiteren Ausführungen der Bewegung B erzeugen (beispielsweise kann die Ansteuerung der Aktoren AKT$_n$ für den Rest der aktuellen Bewegung B und für alle weiteren Ausführungen der Bewegung B derart geändert werden, dass eine Nachgiebigkeit gegenüber externen mechanischen Kontakten erhöht wird). Die Steuerungsinformationen $S_{F_i,G_k^B}(t)$ können je nach Aufgabenstellung und Zielsetzung gewählt oder automatisch geplant werden.

In einem weiteren Schritt erfolgt ein Steuern der Aktoren AKT$_k$ unter Berücksichtigung der Steuerungsinformationen $S_{F_i,G_k^B}(t)$.

Vorteilhaft bilden die beweglichen Elemente ELE$_m$ Armglieder eines Roboterarms, wobei zumindest einige der Elemente ELE$_m$ mittels der Aktoren AKT$_k$ angetrieben werden, und wobei die Sensorik die Messgrößen $G_k^B$ jeweils für einige oder alle Armglieder erfasst.

Das vorgeschlagene Verfahren ermöglicht es insbesondere, bei Durchführung einer Bewegung B erwünschte von unerwünschten Interaktionen mit einer Umgebung des Roboters zu unterscheiden, und die be-

weglichen Elemente $ELE_m$ bzw. die sie antreibenden Aktoren $AKT_n$ abhängig von einer Charakterisierung der tatsächlich auftretenden Interaktionen entsprechend zu steuern.

Das vorgeschlagene Verfahren ermöglicht weiterhin beispielsweise eine automatische Identifikation von aufgabenabhängigen Kontaktschwellen und Signalprofilen, die neben einer ungestörten Ausführung einer Bewegung B durch die Elemente $ELE_m$, auch Interaktionen der Elemente $ELE_m$ mit einer Umgebung des Roboters berücksichtigt.

Das vorgeschlagene Verfahren stützt sich vorteilhaft auf analytische Dynamikmodelle, möglicherweise erweitert um statistische Modelle (Reibung, Rauschen, Modellungenauigkeiten, ....) und eine propriozeptive Sensorik und erlaubt die Integration von externen Sensoren. Es erlaubt die Integration und Nutzung von aktuell auftretenden mechanischen Kontaktinformationen zu einer geplanten mechanischen Interaktion zwischen dem Roboter und einem Menschen sowie die Erkennung, Isolierung und Klassifikation von nicht erwünschten/erlaubten Interaktionen und die Erzeugung entsprechender Reaktionen durch ein Steuern der Aktoren $AKT_k$ unter Berücksichtigung der Steuerungsinformationen $S_{F_i, G_k^B}(t)$.

Inkorrekte Konfigurationen zur Ausführung einer Bewegung B und Fehler bei der aktuellen Ausführung einer Bewegung B können hiermit online identifiziert und klassifiziert werden.

Das Verfahren fungiert bei der operationellen, d.h. betriebsgemäßen Ausführung der Bewegung B somit quasi als Observer und kann leicht in komplexe Manipulationsaufgaben integriert werden, ohne dass in den Aufgaben-/Bewegungsablauf und die Aufgaben der Umgebung eingegriffen werden muss.

Eine analytische Modellbildung komplexer Interaktionen von Mensch und Roboter ist größtenteils nicht möglich. Daher wird vorteilhaft eine probabilistische Modellbildung verknüpft mit vorhandenen analytischen Modellen mit verifizierten empirischen Daten, wie sie durch eine korrekte Ausführung der aufgabengemäßen Bewegung B erhalten werden, vorgeschlagen. Ein solches Modell erfasst die Systemeigenschaften mittels statistischer Aussagen, wie zum Beispiel mittels Konfidenzintervallen. Vorteilhaft erfolgt in dem vorgeschlagenen Verfahren eine Fehlererkennung und Isolierung mittels probabilistischer Ansätze. Dies erlaubt den Einsatz eines großen Methodenbaukastens, der zum Beispiel statistische Lernverfahren wie Entscheidungsbäume oder lineare Klassifikationsmodelle umfasst.

Das vorgeschlagene Verfahren kann weiterhin zwischen ähnlichen Bewegungen B transferiert werden, falls die verwendeten Methoden aufgabenspezifisch parametrisiert sind. Weiterhin kann das vorgeschlagene Verfahren zwischen Roboterklassen transferiert werden, falls die verwendeten Methoden roboterspezifisch parametrisiert sind.

Die Aufgabe der Erfindung ist weiterhin gelöst durch ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Zudem wird die Aufgabe der Erfindung gelöst durch ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ferner wird die Aufgabe der Erfindung gelöst durch ein Computer-Programm-Produkt mit einem auf einem maschinenlesbaren Träger gespeicherten Programmcode zur Durchführung des Verfahrens, wie vorstehend beschrieben, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Nachfolgend wird noch ein allgemeines Beispiel des Verfahrens erläutert.

Grundsätzlich umfasst das Verfahren folgende allgemeine Schritte. In einem ersten Schritt erfolgt eine Generierung von Referenzsignalen durch vorteilhaft mehrfaches Ausführen einer Referenz-Bewegung B einschließlich zugeordneter Referenzinteraktionen mit der Umgebung des Roboters. Hierbei erfolgt ein Aufzeichnen der aufgabenrelevanten Referenzsignale im laufenden Betrieb sowie vorteilhaft eine Vorverarbeitung der Referenzsignale in einer aufgabenabhängigen Art und Weise. Im konkreten Fall kann dies beispielsweise umfassen:

- ein Aufzeichnen von Daten zu externen Drehmomenten und Geschwindigkeiten der Elemente $ELE_n$ während der mehrfachen Ausführung der Referenz-Bewegung B inklusive zugeordneter Referenzinteraktionen mit der Umgebung,
- eine Interpolation von fehlenden Datenpunkten,
- eine Ausrichtung der verschiedenen erfassten Datensätze derselben Referenz-Bewegung B und Identifikation von informationsreichen Punkten in den

Datensätzen.

Anschließend erfolgt eine Modellbildung durch ein adaptives Verfahren. Hierzu gehört beispielsweise eine aufgaben- und signalabhängige Auswahl des Modellierungsverfahrens, eine Übergabe der zuvor erfassten Referenzsignale an das ausgewählte adaptive Verfahren, eine Generierung des Modells auf Signalebene unter dem Gesichtspunkt der Verwendung des Modells im laufenden Betrieb. Im konkreten Fall kann dies umfassen:

- eine Auswahl von Gaußprozessen als adaptive Modellierungsprozesse auf Basis der erfassten Referenzsignale,
- eine Anwendung von Sparsifizierungsmethoden zur Verminderung des Berechnungsaufwands im Modellbildungs- und Auswerteschritt, und
- eine Generierung des Modells durch die Anwendung eines Gaußprozesses auf die sparsifizierten Referenzsignale.

In einem weiteren Schritt erfolgt die Überprüfung der mittels der Sensorik erfassten Signale im laufenden Betrieb des Roboters. Dies umfasst vorteilhaft die Durchführung eines sogenannten " Fault Detection and Isolation (FDI)" Verfahrens. Während der Durchführung der Bewegung B kann durch ständiges Monitoring der aktuell mit der Sensorik erfassten Signale zwischen einem Nominalverlauf der Bewegung B inklusive erlaubter Interaktion mit der Umgebung und Fehlerfällen unterschieden werden. Im konkreten Fall kann dies umfassen:

- eine Überwachung des externen Drehmomentsignals in Verbindung mit der Geschwindigkeit durch den Gaußprozess. Das Signal muss sich beispielsweise im 99 % Konfindenzintervall um die Modellprädiktion des Signals befinden, um sich dem nominalen Bewegungsablauf B zuordnen zu lassen. Sonst wird die Situation als Fehlerfall interpretiert und die Ausführung der Aufgabe unterbrochen.

In einem weiteren Schritt erfolgt eine Klassifikation der Fehlerfälle. Im konkreten Fall kann dies umfassen: Mittels eines Klassifikationsalgorithmus kann die Fehlerursache genauer eingeschränkt werden und somit ist die Möglichkeit einer Interpretation der Signalabweichung im Aufgabenkontext gegeben.

Die Aufgabe wird weiterhin gelöst durch einen Roboter, eingerichtet und ausgeführt zur Ausführung eines Verfahrens, wie vorstehend beschrieben.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

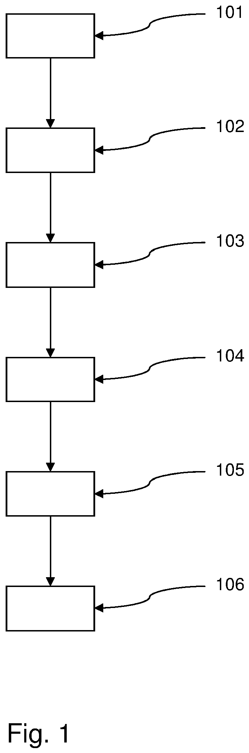

Fig. 1 einen schematisierten Verfahrensablauf des vorgeschlagenen Verfahrens.

**Fig.** 1 zeigt einen schematisierten Verfahrensablauf des vorgeschlagenen Verfahrens zum Betreiben eines Roboters, wobei der Roboter mittels Aktoren $AKT_n$ antreibbare, bewegliche Elemente $ELE_m$ aufweist und zur Ausführung einer Bewegung B mit den Elementen $ELE_m$ eingerichtet ist, mit n = 1, 2,..,.N, m = 1, 2 ..,.M, N = 1, 2, ..,.M = 1, 2, ..,. und wobei der Roboter eine propriozeptive Sensorik zur Ermittlung von Signalen $W_{G_k^B}(t)$ einer die Bewegung B der Elemente $ELE_m$ und deren Interaktionen mit einer Umgebung charakterisierenden Gruppe von Messgrößen $G_k^B$ mit k = 1, 2, ..,.K und K $\geq$ 1 umfasst. Das Verfahren umfasst folgende Schritte.

In einem ersten Schritt 101 erfolgt mit der Sensorik ein Ermitteln von Referenzsignalen $W_{G_k^B}^R(t)$ der Messgrößen $G_k^B$ bei wenigstens einer Durchführung der Bewegung B der Elemente $ELE_m$ als Referenz-Bewegung B, wobei die Referenzsignale $W_{G_k^B}^R(t)$ Referenz-Interaktionen der Elemente $ELE_m$ mit der Umgebung, insbesondere externe auf die Elemente $ELE_m$ wirkende Kräfte und/oder Drehmomente einschließt.

In einem zweiten Schritt 102 erfolgt auf Basis der Referenzsignale $W_{G_k^B}^R(t)$ mit einem adaptiven Verfahren ein automatisches Ermitteln eines analytischen mathematischen Dynamikmodells $M_{G_k^B}$ zur Beschreibung der vom Roboter ausgeführten Referenz-Bewegung B einschließlich der Referenz-Interaktionen durch die Messgrößen $G_k^B$ .

In einem dritten Schritt 103 erfolgt während einer betriebsgemäßen Ausführung der Bewegung B mit dem analytischen mathematischen Dynamikmodell $M_{G_k^B}$ ein Prädizieren von Signalen $W_{G_k^B}^P(t)$ zur Beschreibung der Referenz-Bewegung B einschließlich der Referenz-Interaktionen durch die Messgrößen $G_k^B$ .

In einem vierten Schritt 104 erfolgt ein Vergleichen von aktuell bei der betriebsgemäßen Ausführung der Bewegung B ermittelten Signale $W_{G_k^B}(t)$ (t) mit den prädizierten Signalen $W_{G_k^B}^P(t)$ zur Ermittlung einer Abweichung $\Delta_{G_k^B}(t)$ zwischen $W_{G_k^B}^P(t)$ und $W_{G_k^B}(t)$ , mit k = 1, 2, ..,.Kund K $\geq$ 1.

In einem fünften Schritt 105 erfolgt sofern die

Abweichung $\Delta_{G_k^B}(t)$ einer vorgegebenen Bedingung $BED_{G_k^B}$ nicht genügt, basierend auf der Abweichung $\Delta_{G_k^B}(t)$, ein Klassifizieren der aktuell aufgetretenen Abweichung $\Delta_{G_k^B}(t)$ in eine von einer Anzahl I vorgegebenen Fehlerklassen $F_{i,G_k^B}(\Delta_{G_k^B}(t))$, mit i = 1, 2, ..,.I, wobei für jede der Fehlerklassen $F_{i,G_k^B}(\Delta_{G_k^B}(t))$ vorgegebene Steuerungsinformationen $S_{F_i,G_k^B}(t)$ für die Aktoren AKT$_k$ bereitgestellt sind.

In einem sechsten Schritt 106 erfolgt ein Steuern der Aktoren AKT$_k$ unter Berücksichtigung der Steuerungsinformationen $S_{F_i,G_k^B}(t)$.

## Patentansprüche

1. Verfahren zum Betreiben eines Roboters, wobei der Roboter mittels Aktoren AKT$_n$ antreibbare, bewegliche Elemente ELE$_m$ aufweist und zur Ausführung einer Bewegung B mit den Elementen ELE$_m$ eingerichtet ist, mit n = 1, 2,..,.N, m = 1, 2 ..,. M, N = 1, 2, ..,.M = 1, 2, ..,. und wobei der Roboter eine propriozeptive Sensorik zur Ermittlung von Signalen $W_{G_k^B}(t)$ einer die Bewegung B der Elemente ELE$_m$ und deren Interaktionen mit einer Umgebung charakterisierenden Gruppe von Messgrößen $G_k^B$ mit k = 1, 2, ..,.K und K $\geq$ 1 umfasst, mit folgenden Schritten:

- mit der Sensorik Ermitteln (101) von Referenzsignalen $W_{G_k^B}^R(t)$ der Messgrößen $G_k^B$ bei wenigstens einer Durchführung der Bewegung B der Elemente ELE$_m$ als Referenz-Bewegung B, wobei die Referenzsignale $W_{G_k^B}^R(t)$ Referenz-Interaktionen der Elemente ELE$_m$ mit der Umgebung, insbesondere externe auf die Elemente ELE$_m$ wirkende Kräfte und/oder Drehmomente einschließt,

- auf Basis der Referenzsignale $W_{G_k^B}^R(t)$ mit einem adaptiven Verfahren automatisches Ermitteln (102) eines analytischen mathematischen Dynamikmodells $M_{G_k^B}$ zur Beschreibung der vom Roboter ausgeführten Referenz-Bewegung B einschließlich der Referenz-Interaktionen durch die Messgrößen $G_k^B$,

- während einer betriebsgemäßen Ausführung der Bewegung B:

  ○ mit dem analytischen mathematischen Dynamikmodell $M_{G_k^B}$ Prädizieren (103) von Signalen $W_{G_k^B}^P(t)$ zur Beschreibung der Referenz-Bewegung B einschließlich der Referenz-Interaktionen durch die Messgrößen $G_k^B$,

  ○ Vergleichen (104) von aktuell bei der betriebsgemäßen Ausführung der Bewegung B ermittelten Signale $W_{G_k^B}(t)$ mit den prädizierten Signalen $W_{G_k^B}^P(t)$ zur Ermittlung einer Abweichung $\Delta_{G_k^B}(t)$ zwischen $W_{G_k^B}^P(t)$ und $W_{G_k^B}(t)$, mit k = 1, 2, ..,.K und K $\geq$ 1,

  ○ sofern die Abweichung $\Delta_{G_k^B}(t)$ einer vorgegebenen Bedingung $BED_{G_k^B}$ nicht genügt, basierend auf der Abweichung $\Delta_{G_k^B}(t)$, Klassifizieren (105) der aktuell aufgetretenen Abweichung $\Delta_{G_k^B}(t)$ in eine von einer Anzahl I vorgegebenen Fehlerklassen $F_{i,G_k^B}(\Delta_{G_k^B}(t))$, mit i = 1, 2, ..,.I und I $\geq$ 1, wobei für jede der Fehlerklassen $F_{i,G_k^B}(\Delta_{G_k^B}(t))$ vorgegebene/oder automatisch planbare Steuerungsinformationen $S_{F_i,G_k^B}(t)$ für die Aktoren AKT$_k$ bereitgestellt sind, und

  ○ Steuern (106) der Aktoren AKT$_k$ unter Berücksichtigung der Steuerungsinformationen $S_{F_i,G_k^B}(t)$.

**2.** Verfahren nach Anspruch 1,

bei dem die Gruppe von Messgrößen $G_k^B$ eine oder mehrere der folgende Größen umfasst: auf die bewegliche Roboterkomponente wirkende/s Kraft, Drehmoment, und/oder Position, Geschwindigkeit, oder Beschleunigung der Roboterkomponente, und/oder Druck, Temperatur, Energie, und/oder Kontaktpunkte und/oder geschätzte Kontaktpunkte mit einer Umgebung.

**3.** Verfahren nach Anspruch 1 oder 2,
bei dem die beweglichen Elemente $ELE_m$ Armglieder eines Roboterarms bilden, wobei zumindest einige der Elemente $ELE_m$ mittels der Aktoren $AKT_k$ angetrieben werden, und wobei die propriozeptive Sensorik die Messgrößen $G_k^B$ jeweils für einige oder alle Armglieder erfasst.

**4.** Verfahren nach einem der Ansprüche 1 bis 3,
bei dem das adaptive Verfahren zum Ermitteln des analytischen mathematischen Dynamikmodells $M_{G_k^B}$ auf Basis eines oder mehrerer Gaußprozesse erfolgt.

**5.** Verfahren nach einem der Ansprüche 1 bis 4,
bei dem das analytische mathematische Dynamikmodell $M_{G_k^B}$ um zumindest ein statistisches Modell erweitert ist.

**6.** Verfahren nach Anspruch 5,
bei dem das statistische Modell ein Hidden-Markov-Modell HMM und/oder eine Stütz-Vektor-Maschine SMV und/oder ein neuronales Netz umfasst.

**7.** Verfahren nach einem der Ansprüche 1 bis 6,
bei dem die Signale $W_{G_k^B}(t)$ auf Basis von Rohdaten $R_{G_k^B}(t)$ ermittelt werden, die von Sensoren der propriozeptiven Sensorik erfasst werden und/oder bei dem die Signale $W_{G_k^B}(t)$ auf Basis von Schätzsignalen ermittelt werden.

**8.** Verfahren nach einem der Ansprüche 1 bis 7,
bei dem die Bedingung $BED_{G_k^B}$ für zumindest eine der Messgrößen $G_k^B$ vorgibt, dass die Abweichung $\Delta_{G_k^B}(t)$ zwischen $W_{G_k^B}^P(t)$ und $W_{G_k^B}(t)$ klei-

ner/gleich als ein vorgegebener Grenzwert $LIMIT_{G_k^B}$ ist: $\Delta_{G_k^B}(t) \le LIMIT_{G_k^B}$ ist.

**9.** Verfahren nach einem der Ansprüche 1 bis 8,

bei dem die Steuerungsinformationen $S_{F_i,G_k^B}(t)$ eine abgeschlossene Reaktionsbewegung der Roboterkomponente und/oder eine Änderung zumindest einer Bedingung $BED_{G_k^B}$ und/oder eine Änderung des Modells $M_{G_k^B}$ definiert.

**10.** Roboter, eingerichtet und ausgeführt zur Ausführung eines Verfahrens gemäß einem der Ansprüche 1 bis 9.

**Claims**

**1.** Method for operating a robot, wherein the robot comprises movable elements $ELE_m$ which can be driven by means of actuators $AKT_n$, and is designed to carry out a movement B with the elements $ELE_m$, where n=1, 2, N, m = 1,2 ..,. M, N = 1, 2, ..,. M = 1, 2, ..,. and wherein the robot comprises a proprioceptive sensor system for determining signals $W_{G_k^B}(t)$ of a group of measured variables $G_k^B$, where k = 1, 2, ..,. K and K $\ge$ 1, characterizing the movement B of the elements $ELE_m$ and interactions thereof with an environment, comprising the following steps:

- determining (101), by means of the sensor system, reference signals $W_{G_k^B}^R(t)$ of the measured variables $G_k^B$ during at least one execution of the movement B of the elements $ELE_m$ as a reference movement B, wherein the reference signals $W_{G_k^B}^R(t)$ include reference interactions of the elements $ELE_m$ with the environment, in particular external forces and/or torques acting on the elements $ELE_m$,

- on the basis of reference signals $W_{G_k^B}^R(t)$, using an adaptive method, automatically determining (102) an analytical mathematical dynamic model $M_{G_k^B}$ for describing the reference movement B executed by the robot, including the reference interactions, by the measured variables $G_k^B$,

- during proper execution of the movement B:

  ∘ using the analytical mathematical dynamic model $M_{G_k^B}$, predicting (103) signals $W_{G_k^B}^P(t)$ for describing the reference movement B, including the reference interactions, by the measured variables $G_k^B$,
  ∘ comparing (104) signals currently determined during proper execution of the movement B $W_{G_k^B}(t)$ with the predicted signals $W_{G_k^B}^P(t)$ for determining a deviation $\Delta_{G_k^B}(t)$ between $W_{G_k^B}^P(t)$ and $W_{G_k^B}(t)$, where k = 1, 2, ..,. K and K ≥ 1,
  ∘ insofar as the deviation $\Delta_{G_k^B}(t)$ does not meet a predetermined condition $BED_{G_k^B}$, on the basis of the deviation $\Delta_{G_k^B}(t)$, classifying (105) the currently occurring deviation $\Delta_{G_k^B}(t)$ in one of a number I of predetermined error categories $F_{i,G_k^B}(\Delta_{G_k^B}(t))$, where i = 1, 2, ..,. I and I ≥ 1, wherein, for each of the error categories $F_{i,G_k^B}(\Delta_{G_k^B}(t))$, predetermined/or automatically scheduled control information $S_{F_i,G_k^B}(t)$ for the actuators AKT$_k$ are provided, and
  ∘ controlling (106) the actuators AKT$_k$ taking into account the control information $S_{F_i,G_k^B}(t)$.

2. Method according to claim 1,

wherein the group of measurement variables $G_k^B$ comprises one or more of the following variables: force acting on the movable robot components, torque and/or position, speed, or acceleration of the robot components, and/or pressure, temperature, energy, and/or contact points, and/or estimated contact points with an environment.

3. Method according to either claim 1 or claim 2, wherein the movable elements ELE$_m$ form arm members of a robot arm, at least some of the elements ELE$_m$ being driven by means of the actuators AKT$_k$, and the proprioceptive sensor system acquiring in each case the measured variables $G_k^B$ for some or all arm members.

4. Method according to any of claims 1 to 3, wherein the adaptive method for determining the analytical mathematical dynamic model $M_{G_k^B}$ is carried out on the basis of one or more Gaussian processes.

5. Method according to any of claims 1 to 4, wherein the analytical mathematical dynamic model $M_{G_k^B}$ is enhanced by at least one statistical model.

6. Method according to claim 5, wherein the statistical model comprises a hidden Markov model HMM and/or a support vector machine SMV and/or a neural network.

7. Method according to any of claims 1 to 6, wherein the signals $W_{G_k^B}(t)$ are determined on the basis of raw data $R_{G_k^B}(t)$ acquired by sensors of the proprioceptive sensor system and/or wherein the signals $W_{G_k^B}(t)$ are determined on the basis of estimation signals.

8. Method according to any of claims 1 to 7, in which the condition $BED_{G_k^B}$ predetermines, for at least one of the measured variables $G_k^B$, that the deviation $\Delta_{G_k^B}(t)$ between $W_{G_k^B}^P(t)$ and $W_{G_k^B}(t)$ is

less than/equal to a predetermined limit value $LIMIT_{G_k^B}$: $\Delta_{G_k^B}(t) \leq LIMIT_{G_k^B}$.

9. Method according to any of claims 1 to 8, wherein the control information $S_{F_i,G_k^B}(t)$ defines a completed reaction movement of the robot components and/or a change of at least one condition $BED_{G_k^B}$, and/or a change of the model $M_{G_k^B}$.

10. Robot, designed and implemented to carry out a method according to any of claims 1 to 9.

## Revendications

1. Procédé permettant de faire fonctionner un robot, dans lequel le robot présente des éléments $ELE_m$ mobiles pouvant être entraînés au moyen d'actionneurs $AKT_n$ et est configuré pour l'exécution d'un mouvement B avec les éléments $ELE_m$, avec n = 1, 2,..,. N, m = 1,2 ..,. M, N = 1, 2, ..,. M = 1, 2, ..,. et dans lequel le robot comprend un système de capteurs proprioceptifs pour la détermination de signaux $W_{G_k^B}(t)$ d'un groupe de grandeurs de mesure $G_k^B$, avec k = 1, 2, ..,. K et K ≥ 1, lequel groupe caractérise le mouvement B des éléments $ELE_m$ et leurs interactions avec un environnement, comportant les étapes suivantes :

   - avec le système de capteurs, détermination (101) de signaux de référence $W_{G_k^B}^R(t)$ des grandeurs de mesure $G_k^B$ lors d'au moins une réalisation du mouvement B des éléments $ELE_m$ comme mouvement de référence B, dans lequel les signaux de référence $W_{G_k^B}^R(t)$ incluent des interactions de référence des éléments $ELE_m$ avec l'environnement, en particulier des forces et/ou des couples de rotation externes agissant sur les éléments $ELE_m$,

   - sur la base des signaux de référence $W_{G_k^B}^R(t)$, détermination automatique (102), par un procédé adaptatif, d'un modèle dynamique $M_{G_k^B}$ mathématique analytique pour la description du mouvement de référence B exécuté par le robot, y compris les interactions de référence par les grandeurs de mesure $G_k^B$,

   - pendant une exécution conforme au fonctionnement du mouvement B :

   ◦ prédiction (103), avec le modèle dynamique $M_{G_k^B}$ mathématique analytique, de signaux $W_{G_k^B}^P(t)$ pour la description du mouvement de référence B, y compris les interactions de référence par les grandeurs de mesure $G_k^B$,

   ◦ comparaison (104) de signaux $W_{G_k^B}(t)$ actuellement déterminés lors de l'exécution conforme au fonctionnement du mouvement B avec les signaux prédits $W_{G_k^B}^P(t)$ pour déterminer un écart $\Delta_{G_k^B}(t)$ entre $W_{G_k^B}^P(t)$ et $W_{G_k^B}(t)$, avec k = 1, 2, ..,. K et K ≥ 1,

   ◦ dans la mesure où l'écart $\Delta_{G_k^B}(t)$ ne satisfait pas à une condition $BED_{G_k^B}$ prédéfinie, sur la base de l'écart $\Delta_{G_k^B}(t)$, classification (105) de l'écart $\Delta_{G_k^B}(t)$ actuellement apparu dans une classe d'erreur parmi un nombre I de classes d'erreurs $F_{i,G_k^B}(\Delta_{G_k^B}(t))$ prédéfinies, avec i = 1, 2, ..,. I et I ≥ 1, dans lequel, pour chacune des classes d'erreur $F_{i,G_k^B}(\Delta_{G_k^B}(t))$, des informations de commande $S_{F_i,G_k^B}(t)$ prédéfinies/ou planifiables automatiquement sont fournies pour les actionneurs $AKT_k$, et
   ◦ commande (106) des actionneurs $AKT_k$ en tenant compte des informations de commande $S_{F_i,G_k^B}(t)$
   mande

2. Procédé selon la revendication 1,

dans lequel le groupe de grandeurs de mesure $G_k^B$ comprend une ou plusieurs des grandeurs suivantes : force, couple de rotation et/ou position agissant sur les composants de robot mobiles, vitesse ou accélération des composants de robot, et/ou pression, température, énergie et/ou points de contact et/ou points de contact estimés avec un environnement.

3. Procédé selon la revendication 1 ou 2,
   dans lequel les éléments $ELE_m$ mobiles forment des membres de bras d'un bras de robot, dans lequel au moins certains des éléments $ELE_m$ sont entraînés au moyen des actionneurs $AKT_k$, et dans lequel le système de capteurs proprioceptifs détecte les grandeurs de mesure $G_k^B$ respectivement pour certains membres de bras ou pour tous les membres de bras.

4. Procédé selon l'une des revendications 1 à 3,
   dans lequel le procédé adaptatif permettant la détermination du modèle dynamique $M_{G_k^B}$ mathématique analytique est effectué sur la base d'un ou de plusieurs processus gaussiens.

5. Procédé selon l'une des revendications 1 à 4,
   dans lequel le modèle dynamique $M_{G_k^B}$ mathématique analytique est étendu à au moins un modèle statistique.

6. Procédé selon la revendication 5,
   dans lequel le modèle statistique comprend un modèle de Markov caché HMM et/ou une machine à vecteurs de support SMV et/ou un réseau neuronal.

7. Procédé selon l'une des revendications 1 à 6,
   dans lequel les signaux $W_{G_k^B}(t)$ sont déterminés sur la base de données brutes $R_{G_k^B}(t)$ détectées par des capteurs du système de capteurs proprioceptifs et/ou dans lequel les signaux $W_{G_k^B}(t)$ sont déterminés sur la base de signaux d'estimation.

8. Procédé selon l'une des revendications 1 à 7,
   dans lequel la condition $BED_{G_k^B}$ pour au moins l'une des grandeurs de mesure $G_k^B$ prédéfinit le fait que l'écart $\Delta_{G_k^B}(t)$ entre $W_{G_k^B}^P(t)$ et $W_{G_k^B}(t)$ est in-

férieur ou égal à une valeur limite $LIMIT_{G_k^B}$ prédéfinie : $\Delta_{G_k^B}(t) \leq LIMIT_{G_k^B}$.

9. Procédé selon l'une des revendications 1 à 8,
   dans lequel les informations de commande $S_{F_i,G_k^B}(t)$ définissent un mouvement de réaction achevé du composant de robot et/ou une modification d'au moins une condition $BED_{G_k^B}$ et/ou une modification du modèle $M_{G_k^B}$.

10. Robot, configuré et conçu pour l'exécution d'un procédé selon l'une des revendications 1 à 9.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2106279 A

- US 20150057799 A1